# EUROPEAN PATENT SPECIFICATION

(11) **EP 2 810 361 B1**
(45) Date of publication and mention of the grant of the patent: **21.08.2019**
(21) Application number: 13706720.3
(22) Date of filing: 30.01.2013
(51) Int. Cl.: H02K 16/04, H02K 1/27

(54) **ELECTRICAL MACHINE**
ELEKTRISCHE MASCHINE
MACHINE ÉLECTRIQUE

(30) Priority: 31.01.2012 IN 376CH2012
(43) Date of publication of application: 10.12.2014
(73) Proprietor: TVS Motor Company Limited, Chennai 600006 (IN)
(72) Inventor: DHINAGAR, Samraj, Jabez, Chennai 600 006 (IN); NAIR, Sreeju, Sreedharan, Chennai 600 006 (IN); NALAKATH, Shamsuddeen, Chennai 600 006 (IN)
(74) Representative: Patentanwaltskanzlei Matschnig & Forsthuber OG
(86) International application number: PCT/IB2013/000109
(87) International publication number: WO 2013/114177

(56) References cited:
- US-A- 5 929 541
- US-A1- 2009 021 095
- US-A1- 2009 021 096

## Description

### TECHNICAL FIELD

The subject matter as described herein, in general, relates to electrical machines.

### BACKGROUND

Generally, electrical machines include motors and generators. Typically, an electrical machine includes electrical members, such as a rotating part known as rotor and a stationary part known as stator. The stator and the rotor, in combination, generate an electric voltage, as in the case of generators, or produce a torque, as in the case of motors.

Typically, the stator of the electrical machine includes a stator core and windings which receive current for operation in case the electrical machine is a motor. The rotor is provided with a plurality of magnets. During operation of the electrical machine as a motor, the magnetic field generated in the stator, as a result of the current, interacts with the magnetic field of the magnets on the rotor. The interaction of the magnetic fields causes generation of an electromagnetic force, which further causes rotation of the rotor. On the other hand, during the operation of the electrical machine as a generator, torque is supplied to the rotor to rotate the rotor with reference to the stator. Upon relative motion between the rotor and the stator, the magnetic flux linked with the stator is varied. As a result, an electro-motive force or a voltage is generated in the stator, which can be either directly used further or can be stored for future use.

Prior-art is US2009/0021096 A1, US2009/0021095 A1 and US 5 929 541.

### SUMMARY

The present invention is an electrical machine as defined in the independent claim 1. Further embodiments of the invention are defined in the dependent claims 2 - 10.

### BRIEF DESCRIPTION OF DRAWINGS

The invention will be better understood with regard to the following description and accompanying drawings where:
Fig. 1 illustrates a perspective view of an electrical machine in a dissembled state, according to an embodiment of the invention.
Fig. 2 illustrates an exploded view of components of the electrical machine, in perspective view, according to an embodiment of the invention.
Fig. 3(a), Fig. 3(b), Fig. 3(c), and Fig. 3(d) illustrate various views of the electrical machine in an assembled state, according to an embodiment of the invention.

### DETAILED DESCRIPTION

The subject matter described herein relates to an electrical machine, according to an embodiment of the present invention.

Conventionally, electrical machines, such as motors and generators, find a variety of applications. The applications of the electrical machines can be in portable appliances or applications, such as blenders, washing machines, electric fans, and electric vehicles, or stationary appliances, such as hauling pulleys and back-up generators. In all such applications or appliances, the electrical machines cater to a certain power requirement, either mechanical or electrical. Further, the power requirement that an electrical machine can cater to is a function of the size of the electrical machine. More the power requirement, more the size of the machine. The size of the machine also influences its cost and the space that it occupies. For example, large scale electrical machines are generally used in stationary applications. However, the use of electrical machines for mobile applications is generally limited to low mechanical or electrical power output due to space constraints.

The electrical machine as described herein has a compact size and high electric and mechanical power output. According to an example, the electrical machine, when operating as a motor, is capable of producing substantially more torque with such compact size, and is capable of consuming substantially low currents when used in low torque applications. On the other hand, in another example, while operating as a generator, the electrical machine is capable of generating large amounts of electric power and can be used for high power applications, even with a compact size.

The electrical machine includes a central shaft, a casing, and a core. The core is coaxial to the casing and is enclosed in the casing. In an implementation, the core is fixedly mounted on the central shaft, and the assembly of the core and the central shaft is housed in the casing. In said implementation, the casing is movably mounted on the central shaft, and can be fixed to a moving part, say a wheel hub of a vehicle. In another implementation, the casing can be fixedly mounted on the central shaft and the core can be movably mounted on the central shaft. In either case, a relative motion can be achieved between the first part and the second part. Additionally, in the aforementioned implementations, the central shaft can be stationary or a movable part.

Further, in an assembled state of the electrical machine, the core is separated from the casing by an air gap. The casing is formed of two components - a cylindrical drum and two covers covering either axial ends of the cylindrical drum, i.e., the ends of the cylindrical drum in an axial direction. The cylindrical drum has a plurality of drum magnetic elements provided on an internal circumferential surface of the cylindrical drum. In an implementation, the drum magnetic elements can be permanent magnets. In another implementation, the drum magnetic elements can be electromagnets formed by winding a coil around each of the drum magnetic elements and exciting the coils by providing electrical power.

The core includes an inner member, a structural member, and an outer member. The inner member is formed as a plurality of sectorial magnetic elements. The sectorial magnetic elements are formed as sector-shaped projections extending in an axial direction with respect to the electrical machine. The structural member is provided in interstitial spaces between the sectorial magnetic elements of the inner member.

Further, the outer member is formed as a hollow cylinder having a plurality of radial magnetic elements. The radial magnetic elements can be formed as projections extending from outer surface of a circumferential wall of the hollow cylinder, in the radial direction. The radial magnetic elements can, in an implementation, be permanent magnets. In another implementation, the radial magnetic elements can be electromagnets having coils wound around each of the projections. The outer member is connected to the inner member through the structural member to form a rigid connection.

In an assembled state of the electrical machine, the drum magnetic elements of the casing are in proximity of the radial magnetic elements on the outer member of the core, both separated by the air gap. Additionally, the cover magnetic elements on the casing are in proximity of the sectorial magnetic elements of the inner member of the core. As will be understood, the cover magnetic elements and the sectorial magnetic elements are also separated by the air gap. During operation of the electrical machine, the drum magnetic elements cooperate with the radial magnetic element, and the cover magnetic elements cooperate with the sectorial magnetic elements. The cooperation between the magnetic flux of the drum magnetic elements and the radial magnetic elements and the cooperation between that of the cover magnetic elements and the sectorial magnetic elements are achieved for the operation of the electrical machine.

As will be understood from the foregoing description, the electrical machine can be understood as having at least two sub-machines. In one example, the electrical machine can have two sub-machines, namely, a first sub-machine which is formed by the cooperation between the drum magnetic elements and the radial magnetic element, a second sub-machine which is formed by the cooperation between the cover magnetic elements and the sectorial magnetic elements on both the axial ends of the electrical machine. In another example, by changing a configuration of windings, the electrical machine can have three sub-machines, the first one formed by the drum magnetic elements and the radial magnetic elements, the second one formed on one axial end of the electrical machine between the sectorial magnetic elements and the cover magnetic elements, and a third sub-machine can be formed on the other axial end of the electrical machine between the other set of sectorial magnetic elements and the cover magnetic elements in proximity of each other.

Additionally, during the operation of the electrical machine, a portion or whole of the circumferential wall of the outer member prevents passage of the magnetic flux linked with the radial magnetic elements and the sectorial magnetic elements on the core. For example, an inner surface of the circumferential wall of the outer member prevents the passage of magnetic flux from the radial magnetic elements and the sectorial magnetic elements. As a result, the inner member and the outer member of the core are operationally isolated and are capable of operating as independent components. Hence, the electrical machine described according to the present invention has compact size, rigid construction, and is capable of producing high mechanical and electrical power.

In an implementation, the inner member is fixedly mounted on the shaft at the structural member, and hence, according to said implementation, the core is fixedly mounted on the central shaft. As will be understood, in said implementation, the core forms the stator. According to said implementation, during operation of the electrical machine, the structural member can impart strength to the core to withstand any reaction torque that may be exerted on the core and the central shaft, for example, when the electrical machine operates as a motor. Further, according to said implementation, the casing can be the rotating element, i.e., a rotor of the electrical machine. In an embodiment, the casing can be mounted on the central shaft by means of a plurality of bearings, and can rotate in relation to the stator formed by the core. It will however be understood that in another implementation, the casing can be the stator and the core can be the rotor of the electrical machine.

According to an aspect, the structural member connecting the inner member and the outer member, and also facilitating in mounting the core on the central shaft, can assist in confining the magnetic flux through the radial and sectorial magnetic elements and also help to operationally isolate the inner and outer member. Accordingly, the structural member is formed of a non-magnetic material. Therefore, the structural member can facilitate in effective operation of the electrical machine by substantially reducing effect of eddy currents generated in a region surrounding the sectorial magnetic elements. In an example, the structural member can be formed as a single-piece component made of plastic. In said example, the structural member does not allow formation of the flux loops due to eddy currents around the sectorial magnetic elements.

In another case, the structural member can be formed of a metallic alloy, such as an alloy of aluminum, say for cost reduction and high strength. In said example, small amount of eddy currents are generated in the structural member, because of the structural member being metallic. In order to mitigate the effect due to the eddy currents around the sectorial magnetic elements, in another implementation, the structural member is formed as having two parts - a first portion and a second portion, the two portions being operationally isolated. The operational isolation between the first portion and the second portion can be understood as magnetic isolation and electrical isolation. The magnetic isolation of the first portion and the second portion of the structural member facilitates in substantially diminishing the flux loops generated around the sectorial magnetic elements. In one implementation, the first portion and the second portion of the structural member can be separated by a separator made of a non-magnetic material, such as mica or enamel. In another implementation, the first portion and the second portion of the structural member can be separated by an air gap, to provide magnetic isolation.

As a result of the reduction of the eddy currents surrounding the sectorial magnetic elements, during operation of the electrical machine, the eddy current losses associated with the inner member of the electrical machine are also considerably reduced. Additionally, in case of the structural member being metallic, the heat generated in the inner member because of the eddy currents is also considerably reduced, facilitating an effective and long-lasting operation of the electrical machine.

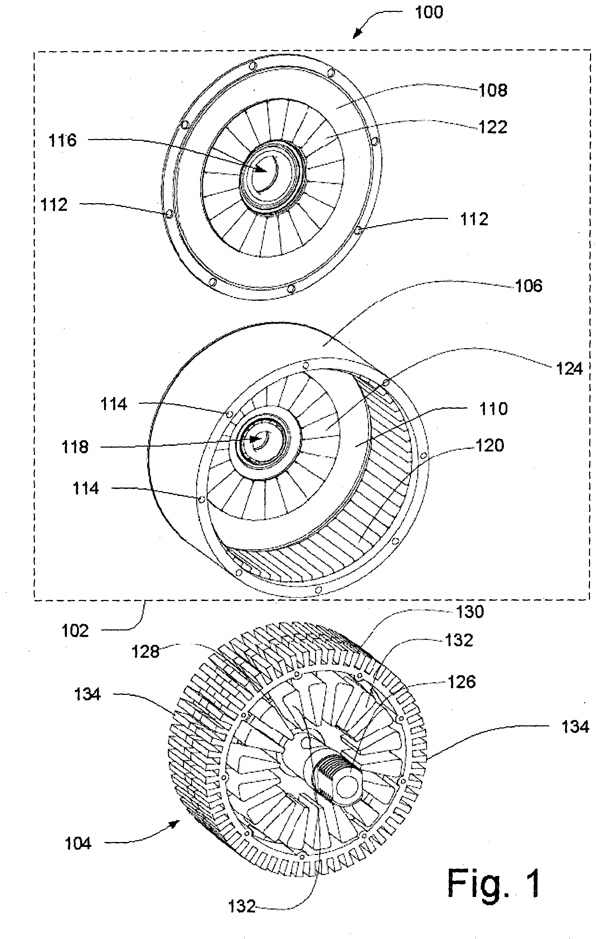

Fig. 1 illustrates a perspective view of an electrical machine 100 in a dissembled state, according to an embodiment of the present invention. According to said embodiment the electrical machine 100 includes a casing 102 and a core 104. The casing 102 includes a cylindrical drum 106, a first cover 108, and a second cover 110. The first cover 108 and the second cover 110 cover the openings of the cylindrical drum 106 in an axial direction. According to an embodiment, the first cover 108 and the second cover 110 are connected to the cylindrical drum 106 by means of connecting elements, such as screws, studs, bolts, and rivets.

According to said embodiment, the first cover 108 and the second cover 110 are each provided with a plurality of holes 112 (not shown on the second cover 110) in proximity of a peripheral edge of the covers 108 and 110. In an implementation, the holes 112 on the first cover 108 are provided equidistant from each other and also equidistant from a center of the first cover 108. Further, the cylindrical drum 106 is provided with a plurality of corresponding holes 114 extending in an axial direction on either side of a circumferential wall. The holes 114 in the cylindrical drum 106 can be provided as blind holes or through holes. Hence, in the assembled state the casing 102 forms a hollow cylindrical enclosure. In addition, the first cover 108 and the second cover 110 each have a central bore 116 and 118, respectively. Further, the casing 102, including the cylindrical drum 106, the first cover 108, and the second cover 110, can made of a magnetic material, such as steel.

For operation of the electrical machine 100, a plurality of drum magnetic elements 120 are provided in the cylindrical drum 106 and a plurality of cover magnetic elements 122 and 124 are provided on each of the first cover 108 and the second cover 110. The drum magnetic elements 120 can either be permanent magnets or form electromagnetic elements. Similarly, the cover magnetic elements 122 and 124 can, each, either be permanent magnets or form electromagnets. The drum magnetic elements 120 in the cylindrical drum 106 are attached equidistant from each other and line an inner surface of the circumferential wall of the cylindrical drum 106. Hence, the drum magnetic elements 120 provide a magnetic field in a radial direction with reference to a central longitudinal axis of the casing 102.

The cover magnetic elements 122 and 124 on the first cover 108 and the second cover 110, respectively, are provided on a surface of the covers 108 and 110, such that in the assembled state of the casing 102 the cover magnetic elements 122 and 124 face each other and lie inside the hollow cylindrical enclosure formed by the casing 102. Each of the cover magnetic elements 122 are attached equidistant from each other on the first cover 108, and similarly, each of the cover magnetic elements 124 are attached equidistant from each other on the second cover 110. It will, however, be understood, that the magnets 120, 122, 124 can be arranged to be at varying distances. Hence, as will be understood, the cover magnetic elements 122 and 124 provide magnetic field in an axial direction, that is, along a direction of the central longitudinal axis of the casing 102.

Further, according to an aspect, the drum magnetic elements 120 in the cylindrical drum 106, the cover magnetic elements 122 on the first cover, and the magnets 124 on the second cover 110 are provided in even numbers, and are arranged so that each alternate magnet 120, 122, 124 on each of the cylindrical drum 106, the first cover 108, and the second cover 110, has opposite polarity on the exposed face.

Further, the core 104 of the electrical machine 100 includes a central shaft 126, an inner member 128 mounted on the central shaft 126, and an outer member 130 connected to the inner member 128. According to an embodiment, the inner member 128 is fixedly mounted on the central shaft 126 by, for example, press fitting or by integrally forming with the inner member 128. Hence, it will be understood that in said embodiment, the core 104 is fixedly mounted on the central shaft 126. In an embodiment, the inner member 128 can be formed as a hollow cylindrical disc having a plurality of sectorial magnetic elements 132 extending in an axial direction on either side of the inner member 128. The sectorial magnetic elements 132, as can be seen, are formed as individual projections in the shape of a sector of a circle, with a width gradually decreasing from a circumference towards a central longitudinal axis (not shown in Fig. 1) of the core 104. According to an implementation, the sectorial magnetic elements 132 can either be permanent magnets or be formed as electromagnets.

Further, in an implementation, the outer member 130 is formed as a hollow cylinder and has a plurality of radial magnetic elements 134 on an external surface of a circumferential wall of the outer member 130. The radial magnetic elements 134 of the outer member 130 extend in a radial direction with reference to the central longitudinal axis of the core 104. Similar to the sectorial magnetic elements. 132, the radial magnetic elements 134 can either be permanent magnets or formed as electromagnets.

The inner member 128 and the outer member 130 are formed as separate elements and connected to each other. In an example, the inner member 128 and the outer member 130 can be connected to each other with a plurality of connecting elements, such as screws, rivets, and studs, or can be fixed by welding or gluing. In another embodiment, the inner member 128 and the outer member 130 can be formed integrated to each other. In an implementation, the core 104, including the inner member 128 and the outer member 130, can be formed by layers of laminations of magnetic material, such as soft iron, ferrite material, or steel. In another implementation, the core 104 can be formed as a solid component of magnetic material.

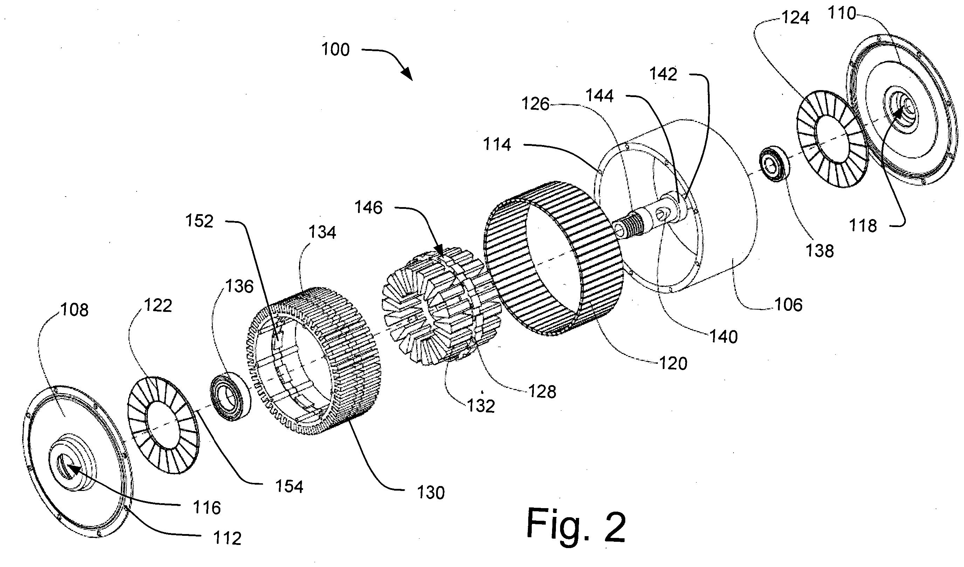

Fig. 2 illustrates an exploded view of the electrical machine 100 showing various components of the casing 102 and the core 104 in perspective view, according to an embodiment of the present subject matter. Beginning from the right, as can be seen, Fig. 2 illustrates the first cover 108, the plurality of cover magnetic elements 122 of the first cover, a first bearing 136, the outer member 130, the inner member 128, the plurality of drum magnetic elements 120 of the cylindrical drum 106, the central shaft 126, the cylindrical drum 106, a second bearing 138, the plurality of cover magnetic elements 124 of the second cover 110, and the second cover 110. As explained earlier, the first cover 108, the second cover 110, the cylindrical drum 106, the plurality of cover magnetic elements 120 and 122, and the plurality of drum magnetic elements 120 form part of the casing, whereas the central shaft 126, the inner member 128, and the outer member 130 form part of the core 104.

In an implementation, each of the drum magnetic elements 120 can be formed in a shape and size to correspond to the inner surface of the circumferential wall of the cylindrical drum 106. Hence, each of the drum magnetic elements 120 can be provided with a slight curvature on the surface along a direction in which the drum magnetic elements 120 are sequentially attached on the cylindrical drum 106. In said implementation, all the drum magnetic elements 120 are of substantially the same size. However, it will be understood that drum magnetic elements of different sizes can also be used. On the other hand, each of the cover magnetic elements 122 and 124 can be formed in the shape of sectors of a circle. Hence, when the cover magnetic elements 122 and 124 are attached on the surface of the first cover 108 and the second cover 110, respectively, the sector shaped magnets 122 and 124 cover the entire

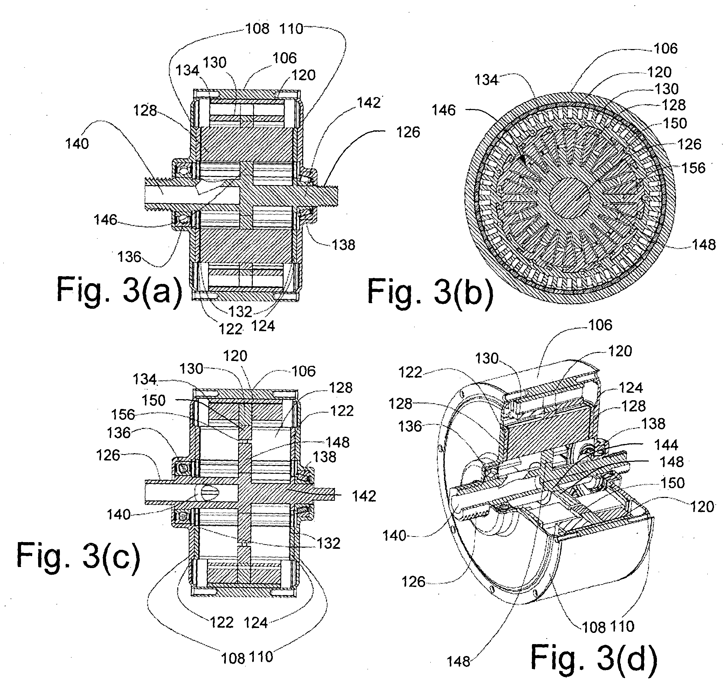

Additionally, the first bearing 136 and the second bearing 138 serve as supports for mounting the casing 102 on the central shaft 126. In an implementation, the casing 102 can be rotatably mounted on the central shaft 126 by means of the first bearing 136 and the second bearing 138. The operation of the electrical machine 100 with reference to the casing 102 and the core 104 is explained in greater detail with reference to Fig. 3(a), 3(b), 3(c), and 3(d). In an implementation, an inner ring diameter of the first bearing 136 is greater than an inner ring diameter of the second bearing 138. Further, in an implementation, the first bearing 136 can be a roller ball bearing, whereas the second bearing 138 can be a cylindrical roller bearing. In one example, the second bearing 138 is a thrust bearing.

Further, according to an implementation, the central shaft 126 has varying outer diameter along the length. In said implementation, the central shaft 126 has a first bearing portion 140 and a second bearing portion 142 (partially shown in Fig. 2), and the first bearing portion 140 is separated from the second bearing portion 142 by a collar 144 and a step. As a result, the first bearing portion 140 has a different outer diameter than that of the second bearing portion 142. In an example, the first bearing portion 140 extends for substantially half the length of the central shaft 126 and the second bearing portion 142 extends for substantially other half of the length of the central shaft 126.

Further, the central shaft 126 can be partially hollow. For example, the length of the central shaft 126, for which the first bearing portion 140 extends, can be hollow, and the rest of the length, for which the second bearing portion 142 extends, can be solid. However, the central shaft 126 can be hollow throughout the length can also be used, which reduces cost associated with the material. The hollow region of the central shaft 126 is provided for passage of electrical wires (not shown) through the central shaft 126 connected to a power source (not shown).

As mentioned earlier, in an implementation, the inner member 128 of the core 104 is formed in the shape of a circular disc having the sectorial magnetic elements 132 on the surface and extending in the radial direction. As can be seen from Fig. 2, illustrating the dissembled state of the electrical machine 100, the inner member 128 includes a structural member 146. According to the invention, the structural member 146 is provided in interstitial spaces between the plurality of sectorial magnetic elements 132, and forms a disc-shaped component of the electrical machine 100. In said implementation, as shown in Fig. 2, the structural member 146 can form a plurality of projections extending in the radial direction with respect to the central longitudinal axis 154 of the electrical machine 100. In an example, the projections of the structural member 146 can be T-shaped and can be distributed equidistantly along the periphery of an edge of the inner member 128. Further, the inner member 128 can be mounted on the central shaft 126 at the structural member 146. The details of construction and function of the structural member 146 are explained with reference to Fig. 3(a), Fig. 3(b), Fig. 3(c), and Fig. 3(d) along with the operation of the electrical machine 100.

The provision of the structural member 146 in the inner member 128 provides strength to the structure of the core 104, and at the same time substantially reduces the cost of manufacturing the core 104. According an implementation, the structural member 146 can be formed of a material other than the material of the rest of the inner member 128. According to the claimed invention, the structural member 146 is made of a non-magnetic material, for example, an alloy of aluminium or a plastic material. Hence, a material less expensive than the material of the rest of the inner member 128 and the outer member 130 can be used for the structural member 146 to lower the cost without compromising on the strength of the core 104.

Further, as mentioned earlier, the outer member 130 is formed as a hollow cylinder having a plurality of radial magnetic elements 134 extending radially from the external surface of the circumferential wall of the outer member, in a direction away from the central longitudinal axis 154 of the electrical machine 100. Further, the outer member 130 can include a connector 152. In an implementation, the connector 152 of the electrical machine 100 is formed as a plurality of projections on an inner surface of the circumferential wall of the outer member 130. Hence, it will be understood that in said implementation, the connector 152 is formed as projections extending in a direction opposite to the radial magnetic elements 134. In an implementation, the connector 152 can be formed of the same material as the inner member 128.

In an implementation, the inner member 128 and the outer member 130 are formed integrally. In said implementation, the connector 152 of the outer member 130 can facilitate in effective bonding between the inner member 128 and the outer member 130, by providing projecting surfaces for connection. According to another implementation, the structural member 146 of the inner member 128 can be connected to the connector 152 of the outer member 130 to form the core 104. As will be understood, in an example, the projections forming the connector 152 are T-shaped and compliment the T-shaped projections forming the first structural member 146.

Fig. 3(a), Fig. 3(b), Fig. 3(c), and Fig. 3(d) illustrate various views of the electrical machine 100, according to an embodiment of the present subject matter. Fig. 3(a) shows a sectional side view, Fig. 3(b) shows a sectional front view, Fig. 3(c) shows a sectional top view, and Fig. 3(d) shows a quarter-sectioned perspective view of the electrical machine 100 in the assembled. For the sake of brevity and simplicity, Fig. 3(a), 3(b), 3(c), and 3(d) are described together.

As can be seen, according to said embodiment, the core 104 is fixedly mounted on the central shaft 126. In an implementation, the structural member 146 of the inner member 128 of the core 104 is press fitted onto the collar 144 of the central shaft 126, for example, by means of a key. In said example, complementary slots can be provided on the collar 144 and the structural member 146 to receive the key. In another implementation, the core 104 can be mounted on the collar 144 by splines. In said implementation, external splines can be provided on the collar 144 and corresponding internal splines can be provided on the structural member 146 for effective mounting. In yet another implementation, the structural member 146 along with the rest of the inner member 128 can be integrally formed with the central shaft 126.

Additionally, according to said embodiment, the casing 102 is mounted on the central shaft 126 and encloses the core 104. A small air gap (not shown) can be provided between the casing 102 and the core 104 to electrically isolate the two components.

Further, according to an implementation, the casing 102 is supported by the first bearing 136 and the second bearing 138. In an implementation, the first bearing 136 is disposed in the central bore 116 of the first cover 108. In an example, the first bearing can be press fitted or glued into the central bore 116 of the first cover 108. Similarly, the second bearing 138 can be disposed in the central bore 118 of the second cover 110 by, for example, press fitting or fixing. Hence, the casing 102 can be rotatably mounted on the central shaft 126, supported on the central shaft 126 by the first bearing 136 and the second bearing 138. Further, the first bearing 136 can be mounted on the central shaft 126 at the first bearing portion 140 and the second bearing 138 can be mounted on the central shaft 126 at a second bearing portion 142.

According to said embodiment, the casing 102 can be a rotor and the core 104 can be a stator of the electrical machine 100. For operation, as mentioned earlier, the casing 102 is provided with the drum magnetic elements 120 lining the cylindrical drum 106, the cover magnetic elements 122 provided on the first cover 108, and the cover magnetic elements 124 provided on the second cover 110. In said embodiment, since the casing 102 forms the rotor, the drum magnetic elements 120 and the cover magnetic elements 122 and 124 can be formed as permanent magnets. As mentioned earlier, in other embodiment, the drum magnetic elements 120 and the cover magnetic elements 122 and 124 can be formed as electromagnets. In such a case, the windings on the magnetic elements 120, 122, and 124 are electrically insulated from the respective magnetic element 120, 122, 124, as a result of which an electrical isolation between the drum magnetic elements 120 and the cover magnetic elements 122 and 124 can be achieved.

As mentioned earlier, in said embodiment, the core 104 forms the stator and can be formed as an electromagnet. In such a case, electrical windings (not shown in figure) are provided in the core 104 for operation of the electrical machine 100. As a result, the radial magnetic elements 134 and the sectorial magnetic elements 132 are formed as electromagnets. For this purpose, in an implementation, radial windings are wound around the radial magnetic elements 134 on the outer member 130, for example, in the plurality of slots between the consecutive radial magnetic elements 134. Further, axial windings are provided wound around the sectorial magnetic elements 132 on the inner member 128 in the plurality of slots formed between the sectorial magnetic elements 132. However, it will be understood that in other embodiments, as explained previously, the magnetic elements on the stator and those on the rotor can either be permanent magnets or can be formed as electromagnets.

The windings can be formed by metallic wires, such as copper wires. In an implementation, the radial windings and the axial windings are 3-phase windings; however, in another implementation, the windings can be single phase windings. Further, the axial windings are electrically insulated from the sectorial magnetic elements 132 of the inner member 128 by an insulating material, such as enamel or paper. Similarly, the radial windings can be electrically insulated from the radial magnetic elements 134 of the outer member 130 with the help of the same or different insulating material. As a result of the electrical insulation of the axial and radial windings, the sectorial magnetic elements 132 of the inner member 128 are electrically insulated from the radial magnetic elements 134 of the outer member 130.

Further, the metallic wires forming the windings can be connected to a power source, such as a battery, for providing excitation to the windings. The metallic wires of the windings can pass through the hollow groove formed in the central shaft 126, as explained earlier with reference to Fig. 2. As explained earlier, the length of the central shaft 126 for which the first bearing portion 140 extends can be hollow and can serve as a passage for the metallic wires of the windings of the core 104 for connecting to the power source. Further, the connection of the axial windings to the power source and the connection of the radial windings to the power source can be independent. As a result, the excitation of the two windings can be provided in a differential manner, that is, the two windings, axial and radial, can be supplied different excitation currents. According to an implementation, the windings can be connected to the power source through a controller (not shown) which can vary the excitation currents to the axial and radial windings.

During operation, in an implementation, the electrical machine 100 can function as an electric motor. In another implementation, the electrical machine 100 may function as a generator. In the former implementation, the windings in the core 104 are excited by supplying power from the power source. As a result of the excitation, the radial windings on the radial magnetic elements 134 can generate a magnetic field in the radial direction with reference to the central longitudinal axis 154 of the electrical machine 100. On the other hand, the axial windings on the sectorial magnetic elements 132 can generate a magnetic field in the axial direction. The radial magnetic field of the radial windings interferes with the radial magnetic field generated by the drum magnetic elements 120, as a result of which the casing 102 experiences a magnetic force in a tangential direction and rotates on the first bearing 136 and the second bearing 138 with respect to the core 104.

In addition, the axial magnetic field of the axial windings conflict with the axial magnetic fields of the cover magnetic elements 122 and the axial magnetic fields of the cover magnetic elements 124. As a result, the casing 102 further experiences a magnetic force in the same direction as that due to the conflicting radial magnetic fields. As a result, the torque generated by the electrical machine 100 is considerably high. According to an implementation, the electrical machine 100 can have a torque to weight ratio of about 15 Newton metres per kilogram (Nm/kg), which is considerably higher than the torque to weight ratio of a conventional electrical machine of similar size. The conventional electrical machine of a similar size has a torque to weight ratio of about 5 Nm/kg. Additionally, the electrical machine 100 as described herein can sustain the peak torque for about 10 to 20 seconds.

Further, in said embodiment, in which the sectorial magnetic elements 132 and the radial magnetic elements 134 are formed as an electromagnet, the axial and radial windings are electrically insulated from the respective magnetic element 132 and 134. This facilitates in the electrical isolation between the sectorial magnetic elements 132 and the radial magnetic elements 134.

During operation of the electrical machine 100 as a motor, as mentioned above, the radial windings and the axial windings can be operated and controlled independent of each other and the excitation current provided in the radial and the axial windings can be different or equal. Hence, the electrical machine 100 can have two sub-machines, first formed by the radial magnetic elements 134 on the core 104 and the drum magnetic elements on the casing 102, and the second formed by the cover magnetic elements on the casing 102 and the sectorial magnetic elements on the core 104. In addition, based on power requirement, current supply to one of the axial windings or the radial windings can be switched off. For example, when the electrical machine 100 is functioning as a motor and is operating in part load condition, the current is provided to those windings which are more efficient in operation out of the two. In such example, the radial windings can be provided with the excitation current from the power source for operating the electrical machine 100 at part load. Additionally, the different currents to the axial windings and the radial windings can be supplied based on an operational curve of the windings in combination with the respective magnets 120, 122, and 124.

In another implementation, the radial windings on the sectorial magnetic elements 132 on one axial end of the core 104 can operate independent of the radial windings on the radial magnetic elements 134 on another axial end of the core 104. Hence, in the same manner as described above, the electrical machine 100 has a first rotor formed on the circumference of the casing 102 and a corresponding first stator formed on the circumference of the core 104, both together working as the first sub-machine. Further, a second stator of the electrical machine 100 can be formed on the one axial end of the core 104 and a corresponding second rotor can be formed on the same end of the casing 102, working as the second sub-machine. In addition, a third stator is formed on the other axial end of the core 104 and a corresponding third stator is formed on this end of the casing 102, to function as the third sub-machine. Hence, it can be understood that the electrical machine 100 can have three sub-machines operating independently.

In the latter implementation of the electrical motor 100 functioning as a generator, the casing 102 is provided a relative motion with respect to the core 104. As a result, the drum magnetic elements 120 and the cover magnetic elements 122 and 124 also move with respect to the radial and axial windings on the core 104. With the relative motion between the magnetic elements 120, 122, 124 and the respective windings in the vicinity of the magnetic elements 120, 122, 124, the magnetic flux linked with the windings varies, as a result of which an electro-motive force (emf) or voltage is generated in the coils. The voltage, hence generated, can be stored in the power source. Hence, it will be understood that the power source is a replenishable power source, such as a rechargeable battery.

Further, by provision of axial windings working in cooperation with the axial magnetic fields generated by the cover magnetic elements 122 and 124, and the radial windings working in cooperation with the radial magnetic field generated by the drum magnetic elements, the electrical machine 100 can generate high magnetic flux densities, and hence, high power density. As a result, a starting torque of the electrical machine 100 while functioning as a motor is very high and is about 130 Nm. On the other hand, while functioning as a generator, as a result of high magnetic flux densities, the high voltages can be generated from the electrical machine 100.

As mentioned earlier, the inner member 128 includes a structural member 146, being made of non-magnetic material. According to an embodiment, the structural member 146 can be formed as a single, continuous component. In one example, the structural member 146 can be made of plastic, and can allow effective functioning of the electrical machine 100 by preventing formation of eddy current loops in the inner member 128.

In another example, due to cost consideration, the structural member 146 can be formed of an aluminium alloy. In said implementation, the structural member 146 can be formed in two parts - a first portion 148 and a second portion 150. Additionally for effective operation of the electrical machine 100, in an implementation, the first portion 148 and the second portion 150 of the structural member 146 are operationally isolated. As mentioned earlier, operational isolation of the first portion 148 and the second portion 150 can be understood to include magnetic isolation as well as electrical isolation of the first portion 148 and the second portion 150 during operation. The magnetic isolation between the first portion 148 and the second portion prevents passage of magnetic flux from the inner member 128 to the outer member 130 through the structural member 146. Additionally, achieving such operational isolation prevents circulation of current in the structural member 146 around the sectorial magnetic elements 132 of the inner member 128. As a result, the heating of the inner member 128 during operation is considerably reduced. Hence, the electrical machine 100 is capable of effectively operating for long duration.

In one example, the first portion 148 and the second portion 150 of the structural member 146 are connected by a separator 156 for operational isolation. In said example, the separator 156 can be made of a non-magnetic and non-conducting material, such as mica or enamel. In another example, the first portion 148 and the second portion 150 of the structural member 146 can be separated by an air gap 156 to achieve operational isolation. In yet another example, the first portion 148 and the second portion 150 can be separated by an air gap as well as a separator 156.

In addition, as explained previously, the structural member 146 can be made of a strong material than that of the rest of the inner member 128. As a result, during the operation of the electrical machine 100 as a motor, the structural member 146 absorbs a substantial amount of reaction torque exerted on the core 104. It will be understood that, in case of the structural member 146 being formed of the first portion 148 and the second portion 150, the core 104 is mounted on the central shaft 126 at the first portion 148. Additionally, in such a case, the inner member 128 is connected to the outer member 130 at the second portion 150 of the structural member 146.

Further, according to an aspect of the present subject matter, the outer member 130 facilitates in achieving magnetic isolation of the inner member 128 and the outer member 130. In an implementation, the inner circumferential wall of the outer member 130, also referred to as back-plate, substantially prevents interference between the magnetic flux linked with the drum magnetic elements 120 and the radial magnetic elements 134, and the magnetic flux linked with the sectorial magnetic elements 132 and the cover magnetic elements 122 and 124. Hence, from the foregoing description, it will be understood that, according to an aspect of the present subject matter, the inner member 128 and the outer member 130 are operationally isolated from each other. In an example, the operational isolation can be understood as magnetic as well as electrical isolation.

Further, the electrical machine 100, as provided according to the present subject matter, is of compact construction, has low weight, and has relatively high driving torque, as compared to a conventional electrical machine having similar specifications of torque or size. As a result of the compact construction, the electrical machine 100 can be used in a hybrid vehicle or an electric vehicle, such as a two wheeled vehicle, three-wheeled vehicle, or a four-wheeled vehicle. In an implementation, the casing 102 of the electrical machine 100 can be mounted on a driving member, such as a hub of a wheel or a drive shaft, of the vehicle and the core 104 mounted on a stationary member of the vehicle. The stationary member can be a shaft supporting the wheel of the vehicle. In said implementation, the electrical machine 100 can operate as a motor and the casing 102 can provide the drive to the wheels for propelling the vehicle.

In another implementation, the electrical machine 100 can be implemented on a crankshaft of an engine of the vehicle. In one example, the casing 102 can be fixedly mounted on the crankshaft and the core 104 can be fixedly mounted on a crankcase of the engine. In another example, the electrical machine 100 can be connected to the crankshaft through a gear train to control the rotational speed of the casing 102 of the electrical machine 100. In said implementation, the electrical machine 100 can be operate as a starter-generator of the engine, which can operate as a motor for cranking the engine and can operate as a generator when the engine is running. The compact construction of the electrical machine 100 allows easy packaging of the electrical machine 100 in an engine block of the engine, and since the electrical machine has low weight, the efficiency of the engine is not affected.

Although the foregoing description is provided with reference to the electrical machine 100 in which the casing 102 forms the rotor and the core 104 forms the rotor, it will be understood that the electrical machine 100 can have various other configurations so as to provide a relative motion between the casing 102 and the core 104. In one example, the casing 102 can be fixedly mounted on the fixed central shaft 126, and the core 104 can be rotatably mounted on the central shaft 126 with the help of two or more bearings. In another example, central shaft 126 can be rotatable and the core 104 can be mounted on the central shaft 126, whereas the casing 102 can be mounted on a wheel hub to rotate in a direction opposite to the core 104.

## Claims

1. An electrical machine (100) comprising
a casing (102) formed as a hollow cylindrical enclosure, the casing (102) comprising:
- a cylindrical drum (106) having a plurality of drum magnetic elements (120) provided on an inside of a circumferential wall of the cylindrical drum (106); and
- a first cover (108) and a second cover (110), each mounted on either side of the cylindrical drum (106) in an axial direction, wherein a plurality of cover magnetic elements (122, 124) are provided on each of the first cover (108) and the second cover (110), the plurality of cover magnetic elements (122) on the first cover (108) facing the plurality of cover magnetic elements (124) on the second cover (110); and
a core (104) coaxially housed in the casing (102) and separated from the casing (102) by an air gap, the core (104) comprising:
- an inner member (128) mounted on a central shaft (126), the inner member (128) having a plurality of sectorial magnetic elements (132) extending in an axial direction and facing the cover magnetic elements (122, 124); and
- an outer member (130) connected to the inner member (128) and operationally isolated from the inner member (128), the outer member (130) being formed as a hollow cylinder having a plurality of radial magnetic elements (134) on an external surface of a circumferential wall of the outer member, the plurality of radial magnetic elements (134) extending in a radial direction and facing the drum magnetic elements (120);
**characterized in that**
the core (104) further comprises a structural member (146) provided in interstitial spaces between the plurality of sectorial magnetic elements (132) in shape of a disc,
wherein the structural member (146) is formed of a non-magnetic material and connects the inner member (128) and the outer member (130).

2. The electrical machine (100) as claimed in claim 1, wherein the structural member (146) is formed as a single piece.

3. The electrical machine (100) as claimed in claim 1, wherein the structural member (146) comprises:
a first portion (148) mounted on the central shaft (126) for mounting the core (104); and
a second portion (150) connected to the outer member (130) for connecting the inner member (128) to the outer member (130), wherein the first portion (148) and the second portion (150) are operationally isolated.

4. The electrical machine (100) as claimed in claim 3, wherein the first portion (148) and the second portion (150) are operationally isolated by at least one of a separator (156) and an air gap (156).

5. The electrical machine (100) as claimed in claim 1, wherein the core (104) is a stator of the electrical machine (100) and the casing (102) is a rotor of the electrical machine (100).

6. The electrical machine (100) as claimed in claim 5, wherein the drum magnetic elements (120) and the cover magnetic elements (122, 124) on the casing (102) are formed as permanent magnets, and the sectorial magnetic elements (132) and the radial magnetic elements (134) are formed as electromagnets.

7. The electrical machine (100) as claimed in claim 5, wherein the core (104) is mounted on a stationary part of a vehicle and the casing (102) is connected to one of a crankshaft of a vehicle and a driving member of the vehicle.

8. The electrical machine (100) as claimed in claim 1, wherein the core (104) is fixedly mounted on the central shaft (126).

9. The electrical machine (100) as claimed in claim 1 , wherein the casing (102) is rotatably mounted on the central shaft (126), and wherein the first cover (108) of the casing (102) is supported on the central shaft (126) by a first bearing (136) and the second cover (110) of the casing (102) is supported on the central shaft (126) by a second bearing (138).

10. The electrical machine (100) as claimed in one of the preceding claims, implemented in one of an electric vehicle and a hybrid vehicle.

## Patentansprüche

1. Elektrische Maschine (100), aufweisend
ein Gehäuse (102) in Form einer hohlen zylindrischen Einhausung, wobei das Gehäuse (102)
- eine zylindrische Trommel (106) mit einer Vielzahl magnetischer Trommelelemente (120), die an einer Innenseite einer Umfangswand der zylindrischen Trommel (106) vorgesehen sind, und
- eine erste Abdeckung (108) und eine zweite Abdeckung (110), jeweils auf einer der beiden Seiten der zylindrischen Trommel (106) in axialer Richtung angebracht, wobei eine Vielzahl magnetischer Abdeckelemente (122, 124) je auf der ersten Abdeckung und auf der zweiten Abdeckung (108) vorgesehen sind, wobei die Vielzahl magnetischer Abdeckelemente (122) auf der ersten Abdeckung (108) der Vielzahl magnetischer Abdeckelemente (124) auf der zweiten Abdeckung (110) zugewandt ist,
aufweist, und
einen Kern (104), der koaxial in dem Gehäuse (102) gelagert ist und von dem Gehäuse (102) durch einen Luftspalt getrennt ist, wobei der Kern (104)
- einen auf einer zentralen Welle (126) angebrachten Innenteil (128) mit einer Vielzahl magnetischer Sektorelemente (132), die in axialer Richtung verlaufen und den magnetischen Abdeckelementen (122, 124) zugewandt sind, und
- einen Außenteil (130), der mit dem Innenteil (128) verbunden und von dem Innenteil (128) operativ getrennt ist, wobei der Außenteil (130) als hohler Zylinder mit einer Vielzahl magnetischer Radialelemente (134) auf einer Außenfläche einer Umfangswand der Außenteils ausgebildet ist, wobei die Vielzahl magnetischer Radialelemente (134) in radialer Richtung verlaufen und dem magnetischen Trommelelementen (120) zugewandt sind,
aufweist, **dadurch gekennzeichnet, dass**
der Kern (104) ferner ein Strukturelement (146) aufweist, das in Zwischenräumen zwischen der Vielzahl magnetischer Sektorelemente (132) in Form einer Scheibe vorgesehen ist,
wobei das Strukturelement (146) aus nichtmagnetischem Material besteht und den Innenteil (128) und den Außenteil (130) miteinander verbindet.

2. Elektrische Maschine (100) nach Anspruch 1, wobei das Strukturelement (146) einstückig ausgebildet ist.

3. Elektrische Maschine (100) nach Anspruch 1, wobei das Strukturelement (146) aufweist:
einen ersten Teilbereich (148), der auf der zentralen Welle (126) zum Anbringen des Kerns (194) montiert ist, und
einen zweiten Teilbereich (150), der mit dem Außenteil (130) zum Verbinden des Innenteils (128) mit dem Außenteil (130) verbunden ist,
wobei der erste Teilbereich (148) und der zweite Teilbereich (150) operativ getrennt sind.

4. Elektrische Maschine (100) nach Anspruch 3, wobei der erste Teilbereich (148) und der zweite Teilbereich (150) durch einen Separator (156) und/oder einen Luftspalt (156) operativ getrennt werden.

5. Elektrische Maschine (100) nach Anspruch 1, wobei der Kern (104) ein Stator der elektrischen Maschine (100) ist, und das Gehäuse ein Rotor der elektrische Maschine (100) ist.

6. Elektrische Maschine (100) nach Anspruch 5, wobei die magnetischen Trommelelemente (120) und die magnetischen Abdeckelemente (122, 124) auf dem Gehäuse (102) als Permanentmagnete ausgebildet sind, und die magnetischen Sektorelemente (132) und die magnetischen Radialelemente (134) als Elektromagnete ausgebildet sind.

7. Elektrische Maschine (100) nach Anspruch 5, wobei der Kern (104) auf einem stationären Teil eines Fahrzeugs montiert ist, und das Gehäuse (102) mit einer Kurbelwelle eines Fahrzeugs oder einem Antriebselement des Fahrzeugs verbunden ist.

8. Elektrische Maschine (100) nach Anspruch 1, wobei der Kern (104) auf der zentralen Welle fest montiert ist.

9. Elektrische Maschine (100) nach Anspruch 1, wobei das Gehäuse (102) drehbar auf der zentralen Welle (126) montiert ist, und wobei die erste Abdeckung (108) des Gehäuses (102) auf der zentralen Welle (126) durch ein erstes Lager (136) und die zweite Abdeckung (110) des Gehäuses (102) auf der zentralen Welle (126) durch ein zweites Lager (136) gehalten ist.

10. Elektrische Maschine (100) nach einem der vorhergehenden Ansprüche, implementiert in einem elektrischen Fahrzeug oder einem Hybridfahrzeug.

## Revendications

1. Machine électrique (100) comprenant un carter (102) réalisé sous la forme d'une enceinte cylindrique creuse, le carter (102) comprenant :
- un tambour cylindrique (106) ayant une pluralité d'éléments magnétiques de tambour (120) disposés sur un intérieur d'une paroi circonférentielle du tambour cylindrique (106) ; et
- un premier couvercle (108) et un second couvercle (110), chacun étant monté sur l'un ou l'autre côté du tambour cylindrique (106) dans une direction axiale, une pluralité d'éléments magnétiques de couvercle (122, 124) étant disposés sur chacun du premier couvercle (108) et du second couvercle (110), la pluralité d'éléments magnétiques de couvercle (122) sur le premier couvercle (108) faisant face à la pluralité d'éléments magnétiques de couvercle (124) sur le second couvercle (110) ; et
un noyau (104) reçu coaxialement dans le carter (102) et séparé du carter (102) par un entrefer, le noyau (104) comprenant :
- un élément interne (128) monté sur un arbre central (126), l'élément interne (128) ayant une pluralité d'éléments magnétiques sectoriels (132) s'étendant dans une direction axiale et faisant face aux éléments magnétiques de couvercle (122, 124) ; et
- un élément externe (130) relié à l'élément interne (128) et isolé fonctionnellement de l'élément interne (128), l'élément externe (130) étant réalisé sous la forme d'un cylindre creux ayant une pluralité d'éléments magnétiques radiaux (134) sur une surface externe d'une paroi circonférentielle de l'élément externe, la pluralité d'éléments magnétiques radiaux (134) s'étendant dans une direction radiale et faisant face aux éléments magnétiques de tambour (120) ;
**caractérisée par le fait que**
le noyau (104) comprend en outre un élément structural (146) disposé dans des espaces interstitiels entre la pluralité d'éléments magnétiques sectoriels (132) en forme de disque,
l'élément structural (146) étant formé d'un matériau non-magnétique et reliant l'élément interne (128) et l'élément externe (130).

2. Machine électrique (100) selon la revendication 1, dans laquelle l'élément structural (146) est formé d'une seule pièce.

3. Machine électrique (100) selon la revendication 1, dans laquelle l'élément structural (146) comprend :
une première partie (148) montée sur l'arbre central (126) pour monter le noyau (104) ; et
une seconde partie (150) reliée à l'élément externe (130) pour relier l'élément interne (128) à l'élément externe (130), la première partie (148) et la seconde partie (150) étant isolées fonctionnellement.

4. Machine électrique (100) selon la revendication 3, dans laquelle la première partie (148) et la seconde partie (150) sont isolées fonctionnellement par au moins l'un d'un séparateur (156) et d'un entrefer (156).

5. Machine électrique (100) selon la revendication 1, dans laquelle le noyau (104) est un stator de la machine électrique (100) et le carter (102) est un rotor de la machine électrique (100).

6. Machine électrique (100) selon la revendication 5, dans laquelle les éléments magnétiques de tambour (120) et les éléments magnétiques de couvercle (122, 124) sur le carter (102) sont réalisés sous la forme d'aimants permanents, et les éléments magnétiques sectoriels (132) et les éléments magnétiques radiaux (134) sont réalisés sous la forme d'électroaimants.

7. Machine électrique (100) selon la revendication 5, dans laquelle le noyau (104) est monté sur une partie stationnaire d'un véhicule et le carter (102) est relié à l'un d'un vilebrequin d'un véhicule et d'un élément d'entraînement du véhicule.

8. Machine électrique (100) selon la revendication 1, dans laquelle le noyau (104) est monté de manière fixe sur l'arbre central (126).

9. Machine électrique (100) selon la revendication 1, dans laquelle le carter (102) est monté de manière rotative sur l'arbre central (126), et dans laquelle le premier couvercle (108) du carter (102) est supporté sur l'arbre central (126) par un premier palier (136) et le second couvercle (110) du carter (102) est supporté sur l'arbre central (126) par un second palier (138).

10. Machine électrique (100) selon l'une quelconque des revendications précédentes, mise en oeuvre dans l'un d'un véhicule électrique et d'un véhicule hybride.
